# DEMANDE DE BREVET EUROPEEN

(11) **EP 0 671 635 A1**
(43) Date de publication de la demande: **13.09.1995**
(21) Numéro de dépôt: 95400498.2
(22) Date de dépôt: 08.03.1995
(51) Int. Cl.: G01S 13/28, G01S 13/32, G01S 13/76, G01S 13/82, G01S 13/44, G01S 3/32

(54) **Procédé et dispositif de transmission et de radiolocalisation à accès multiples utilisant l'étalement de spectre**

(30) Priorité: 10.03.1994 FR 9402749
(71) Demandeur: SOCIETE NATIONALE D'ETUDE ET DE CONSTRUCTION DE MOTEURS D'AVIATION, "S.N.E.C.M.A.", F-75015 Paris (FR)
(72) Inventeur: Giguet, Jean-Louis Roger, F-75015 Paris (FR); Vieules, Philippe Christian Michel, F-31460 Caraman (FR)

(57) **Abrégé**

L'invention concerne un système intégré de transmission d'informations entre différents mobiles et une station de contrôle comportant une antenne (10) à plusieurs sources, et de radiolocalisation de mobiles utilisant la technique d'étalement de spectre.

Un code d'étalement est attribué à chaque mobile, ce qui permet de sélectionner un mobile en particulier, de le télécommander et de recevoir des signaux de télémesure en provenance de ce mobile.

La localisation angulaire des mobiles est effectuée grâce à l'asservissement de l'antenne (10) de la station de contrôle par une méthode dite de monopulse d'amplitude, les signaux d'écartométrie étant délivrés par un récepteur à spectre étalé (12).

## Description

L'invention concerne un procédé et un dispositif de transmission et de radiolocalisation à accès multiples utilisant l'étalement de spectre. Elle s'applique notamment à la gestion de drônes, à la télécommande de cibles, ou au téléguidage de véhicules terrestres.

la technique d'étalement de spectre par séquence directe est couramment utilisée pour réaliser une transmission d'informations discrète, confidentielle et résistante aux brouillages. Cette technique consiste, à l'émission, à moduler, par une séquence pseudo-aléatoire périodique, un signal déjà modulé par une information utile à transmettre. La séquence pseudo-aléatoire, aussi appelée "code d'étalement", a un débit beaucoup plus important que l'information utile. De ce fait, le spectre du signal émis se trouve élargi dans une bande proportionnelle à la vitesse de transmission de la séquence pseudo-aléatoire, assurant ainsi la discrétion de la transmission. A la réception, la récupération de l'information utile est obtenue par corrélation du signal reçu avec la séquence pseudo-aléatoire, cette corrélation étant suivie d'une démodulation classique.

Cependant les systèmes qui utilisent la technique d'étalement de spectre sont dédiés à la transmission d'information entre des mobiles ou entre une station fixe et des mobiles et ne permettent pas simultanément de localiser précisément un mobile dans l'espace tridimensionnel.

Par ailleurs, il existe des systèmes de localisation d'un mobile dans l'espace, mais ces systèmes ne permettent pas de transmettre simultanément des données et ne sont pas résistants aux brouillages.

l'invention a pour but de pallier les inconvénients des systèmes connus et de réaliser un système intégré de faible volume permettant d'assurer simultanément les fonctions de localisation en distance, de localisation angulaire, le traitement de plusieurs mobiles, la transmission séquentielle aux mobiles des ordres de télécommande en provenance d'une station de contrôle, la transmission au sol de paramètres de télémesures en provenance des mobiles, et la résistance au brouillage sur la localisation et la transmission de données.

Pour obtenir une résistance au brouillage, la technique d'étalement de spectre est utilisée. Un code d'étalement différent est attribué à chaque mobile, ce qui permet de sélectionner un mobile en particulier, de le télécommander et de recevoir des signaux de télémesure en provenance de ce mobile.

La localisation du mobile en distance peut être effectuée de deux façons différentes par la station de contrôle : soit par la mesure du déphasage entre les codes d'étalement à l'émission et à la réception ; soit en mesurant le temps écoulé entre l'émission d'un message et la réception de la réponse.

La localisation angulaire est effectuée grâce à l'asservissement de l'antenne de la station de contrôle par l'utilisation d'une technique dite de monopulse d'amplitude. Pour cela, les signaux de télémesure sont reçus sur au moins deux sources de réception différentes, puis traités par un comparateur monopulse de manière à engendrer des signaux somme et différence permettant, au moyen d'un récepteur d'écartométrie, de mesurer l'écart entre la direction du mobile et la direction de pointage de l'antenne.

Pour que la localisation angulaire soit résistante au brouillage, avant d'être traités par le récepteur d'écartométrie, les signaux somme et différence sont préalablement traités par un récepteur à spectre étalé dans lequel les signaux sont corrélés avec le code d'étalement associé au mobile selectionné.

Selon l'invention, e procédé pour la transmission d'informations entre des mobiles et une station de contrôle comportant au moins une antenne d'émission et de réception, et pour la radiolocalisation des mobiles, dans lequel les liaisons entre les mobiles et la station de contrôle sont réalisées selon une technique dite à étalement de spectre, est caractérisé en ce qu'il consiste :
- à sélectionner et à désigner un mobile particulier,
- à pointer l'antenne de la station dans une direction estimée du mobile désigné pour émettre vers le mobile des informations de télécommande à spectre étalé et recevoir en réponse, en provenance du mobile, des informations de télémesure à spectre étalé, la réception des informations de télémesure étant effectuée sur au moins deux sources de réception de l'antenne de la station,
- à traiter les signaux de télémesure reçus par les différentes sources de réception de manière à engendrer des signaux somme et différence,
- à engendrer des signaux d'écartométrie par corrélation des signaux somme et différence avec un code d'étalement associé au mobile désigné,
- à déterminer, à partir des signaux d'écartométrie, une erreur de pointage angulaire de l'antenne, et à asservir l'antenne en fonction de cette erreur de pointage.

L'invention concerne également un dispositif pour la transmission d'informations entre une station de contrôle et des mobiles et pour la radiolocalisation de mobile dans lequel les liaisons entre les mobiles et la station de contrôle sont réalisées selon une technique dite à étalement de spectre, caractérisé en ce que la station de contrôle comporte :
- au moins une antenne munie de moyens d'asservissement en position pouvant fonctionner dans un mode de poursuite en azimut et en site et dans un mode de désignation en azimut et en site,
- un émetteur à spectre étalé destiné à transmettre une information de télécommande vers un mobile préalablement sélectionné,
- un récepteur à spectre étalé destiné à démoduler des signaux provenant du mobile sélectionné et à engendrer des signaux d'écartométrie pour réaliser l'asservissement de l'antenne,
- un récepteur d'écartométrie destiné à assurer un suivi du mobile en mode poursuite à partir des signaux d'écartométrie délivrés par le récepteur à spectre étalé,
- une unité de calcul associée à un calculateur destinée à identifier et à sélectionner un mobile particulier, à assurer la gestion du protocole de communication avec le calculateur embarqué et la station de contrôle, à assurer la gestion du positionnement de l'antenne de la station suivant des consignes provenant du calculateur, à effectuer la localisation angulaire du mobile en azimut et/ou en site, à effectuer la localisation du mobile en distance ;
   et en ce que chaque mobile comporte :
- une antenne d'émission et de réception
- un récepteur à spectre étalé destiné à démoduler des messages provenant de la station de contrôle,
- un émetteur à spectre étalé destiné à transmettre des signaux de télémesure,
- un calculateur embarqué
- une unité de calcul destinée à assurer la gestion du protocole de communication avec le calculateur embarqué et le station de contrôle, à assurer la gestion du positionnement de l'antenne du mobile suivant des consignes provenant du calculateur embarqué.

D'autres particularités et avantages de l'invention apparaîtront clairement dans la suite de la description donnée à titre d'exemple non limitatif et faire en regard des figures annexées qui représentent :
- la figure 1, un synoptique d'une station de contrôle appartenant au système de transmission, selon l'invention ;
- la figure 2 un synoptique d'un mobile appartenant au système de transmission, selon l'invention ;
- la figure 3, un synoptique de l'ensemble d'émission et de réception d'un mobile ;
- la figure 4, un synoptique de l'ensemble d'émission et de réception de la station de contrôle.

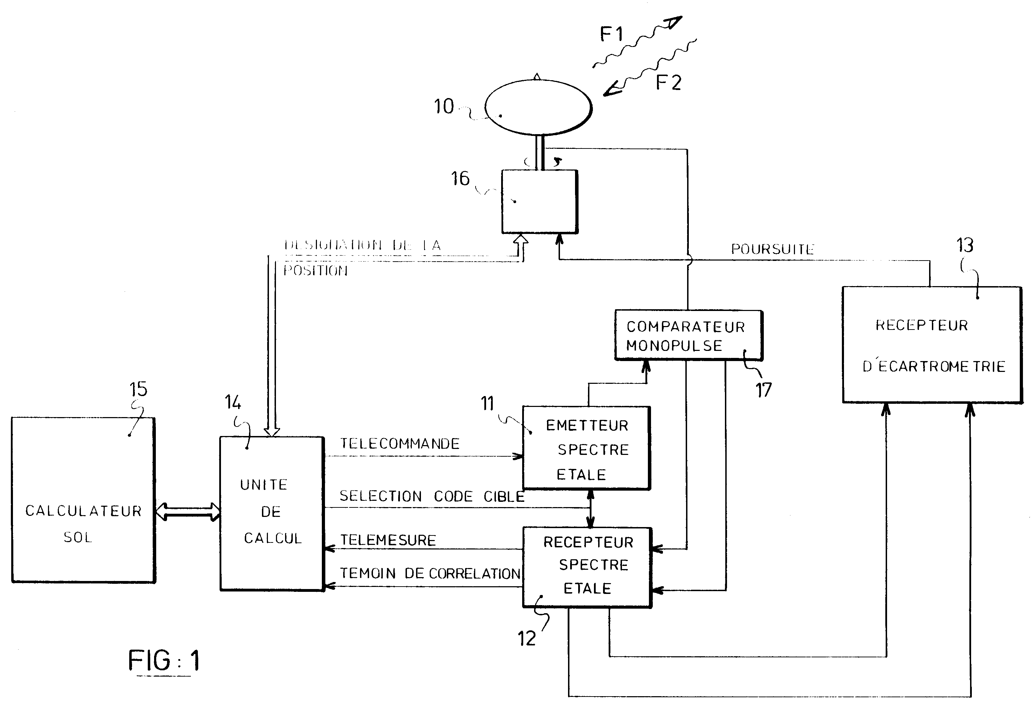

La figure 1 représente un synoptique d'une station de contrôle appartenant au système de transmission, selon l'invention. La station comporte au moins une antenne 10 d'émission et de réception munie de moyens d'asservissement en position et pouvant fonctionner dans un mode de désignation d'objectif en azimut et en site et dans un mode de poursuite en azimut et/ou en site ; un émetteur 11 à spectre étalé destiné à transmettre par l'intermédiaire de l'antenne 10, une information de télécommande vers un mobile préalablement sélectionné, la sélection d'un mobile étant réalisée par la sélection d'un code d'étalement particulier associé à ce mobile ; un récepteur 12 à spectre étalé destiné à démoduler des signaux provenant du mobile sélectionné et à engendrer des signaux d'écartométrie pour l'asservissement de l'antenne ; un récepteur d'écartométrie 13 destiné à assurer un suivi du mobile sélectionné en mode poursuite ; une unité de calcul 14, associée à un calculateur 15, destinée à identifier et sélectionner un mobile particulier, à assurer la gestion du protocole de communication avec le calculateur 15 et le mobile sélectionné, à traiter des données issues du calculateur ou de la télémesure, à assurer la gestion de la position de l'antenne 10 suivant des consignes provenant du calculateur, à effectuer la localisation angulaire du mobile en azimut et/ou en site, à effectuer la localisation du mobile en distance.
Le traitement des données de télémesure reçues est effectuée par l'unité de calcul 14 après avoir été décodées et démodulées dans le récepteur 12 à spectre étalé. Un témoin de corrélation indique à l'unité de calcul que les opérations de décodage et de démodulation sont effectives.

L'orientation de l'antenne 10 en azimut et en élévation est effectuée par un positionneur 16 muni de servomécanismes en fonction des consignes provenant de l'unité de calcul 14 lorsque l'antenne fonctionne en mode de désignation, ou en fonction des consignes provenant du récepteur d'écartométrie 13 lorsque l'antenne fonctionne en mode poursuite.

L'antenne 10 comporte au moins une source d'émission et deux sources de réception qui permettent d'engendrer, par l'intermédiaire d'un comparateur monopulse 17 et après traitement par le récepteur à spectre étalé, des signaux d'écartométrie et d'assurer la poursuite du mobile sélectionné par la technique connue sous le nom de monopulse d'amplitude.

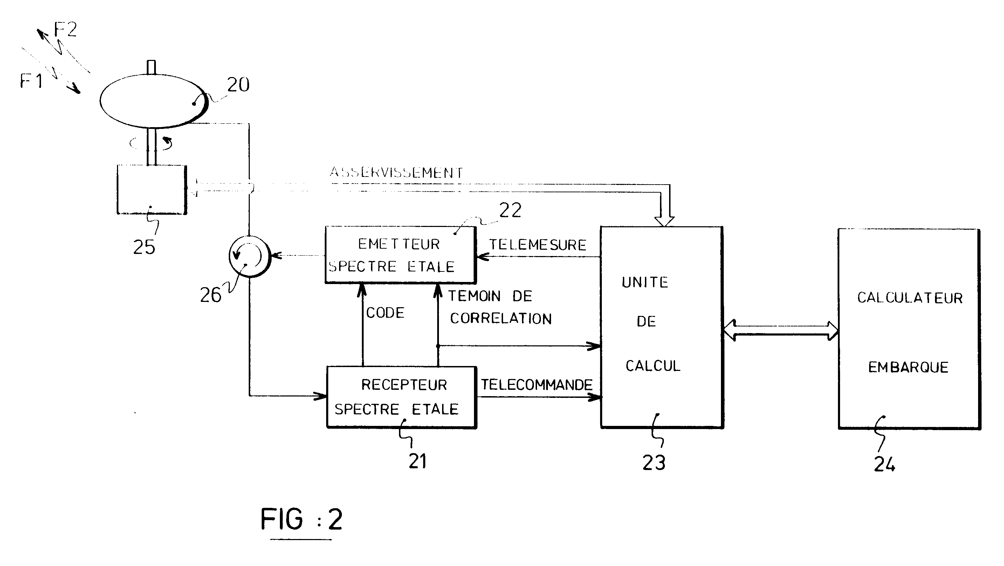

La figure 2 représente un synoptique d'un mobile appartenant au système de transmission, selon l'invention.
Le mobile comporte au moins une antenne 20 d'émission et de réception, un récepteur 21 à spectre étalé destiné à démoduler des messages de télécommande provenant de la station de contrôle, un émetteur à spectre étalé 22 destiné à transmettre des signaux de télémesure, une unité de calcul 23, en liaison avec un calculateur embarqué 24, destinée à assurer la gestion du protocole de communication avec le calculateur embarqué et la station de contrôle, à traiter des données issues du calculateur embarqué ou de la télécommande, à assurer la gestion de la position de l'antenne 20 du mobile suivant des consignes provenant du calculateur embarqué.

Pour obtenir une directivité suffisante, l'antenne 20 est asservie en azimut par l'intermédiaire de l'unité de calcul et suivant les consignes fournies par le calculateur embarqué.

L'orientation de l'antenne 20 est effectuée par un positionneur 25 muni de servomécanismes.

Un circulateur 26 réalise la séparation des signaux d'émission et de réception.

Les mobiles ont un rôle d'esclave ; ils ne peuvent émettre des informations que lorsqu'ils en ont reçu la demande.

A chaque mobile est attribué un code d'étalement différent. La sélection d'un mobile est effectuée par la station de contrôle par le choix du code d'étalement associé au mobile. Deux mobiles ne peuvent pas être activés simultanément si l'intercorrélation entre leurs codes respectifs est suffisamment importante.

La transmission d'informations étant full-duplex, les émissions de signaux par la station de contrôle en direction d'un mobile s'effectuent dans une bande de fréquences F1, tandis que les émissions de signaux par un mobile en direction de la station de contrôle s'effectuent dans une bande de fréquences F2 distincte de la bande F1.

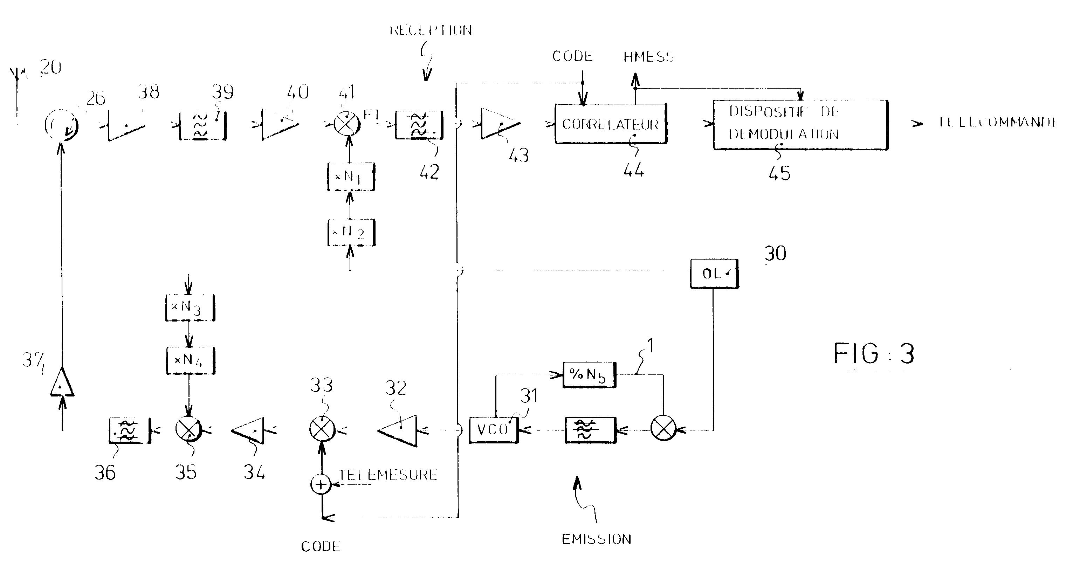

La figure 3 représente un synoptique de l'ensemble d'émission et de réception d'un mobile.
L'ensemble comporte une partie émission et une partie réception séparées par le circulateur 26. Un oscillateur local 30 fournit une référence commune pour l'émetteur et le récepteur. Pour obtenir une bonne stabilité en fréquence, l'oscillateur local est de préférence un oscillateur à quartz. La partie émission comporte, en sortie de l'oscillateur local 30, une boucle à verrouillage de phase 1 dans laquelle un oscillateur contrôlé en tension 31 est asservi de manière à délivrer une fréquence égale à un multiple N5 de la fréquence de l'oscillateur local 30. Après amplification dans un amplificateur 32, le signal délivré par l'oscillateur contrôlé en tension 31 est modulé, dans un modulateur 33, par un code d'étalement et par un signal de télémesure à transmettre. Le procédé de modulation du signal par les données de télémesure, peut être une modulation de phase ou de fréquence. Le signal modulé par la télémesure étalée par le code est ensuite amplifié dans un amplificateur 34 et transmis par l'antenne 20 après transposition dans la bande des hyperfréquences au moyen d'une modulation avec une fréquence porteuse issue de l'oscillateur local 30 à un coefficient multiplicateur N3 X N4 près, la modulation étant effectuée par un modulateur 35, et après filtrage dans un filtre passe-bande 36 et amplification dans un amplificateur 37.

La partie réception comporte des moyens de transposition du signal reçu à une fréquence intermédiaire, des moyens de corrélation du signal reçu avec un code pseudo-aléatoire local identique à celui produit à l'émission et synchronisé sur celui-ci, et des moyens de démodulation. Le signal reçu par l'antenne 20 est dirigé vers le récepteur par l'intermédiaire du circulateur 26. Après amplification dans un premier amplificateur 38 à faible bruit, filtrage dans un filtre passe-bande 39 et amplification dans un amplificateur 40 à grand gain, le signal reçu est transposé à un fréquence intermédiaire au moyen d'une modulation avec une fréquence porteuse issue de 'oscillateur local 30 à un coefficient multiplicatif N1 X N2 près. La modulation est effectuée par un modulateur 41. Le signal est ensuite filtré dans un filtre 42 à bande étroite centré sur la fréquence intermédiaire, amplifié dans un amplificateur 43 puis appliqué à un corrélateur 44 dont le role est de comprimer le spectre du signal en supprimant la modulation par le code d'étalement. Pour cela, le corrélateur 14 effectue la corrélation du signal avec un code pseudo-aléatoire local identique au code émis par la station et synchronisé sur celui-ci. En sortie du corrélateur, le signal est appliqué à un dispositif 45 de démodulation cohérente qui permet de restituer les informations de télécommande émises par la station.

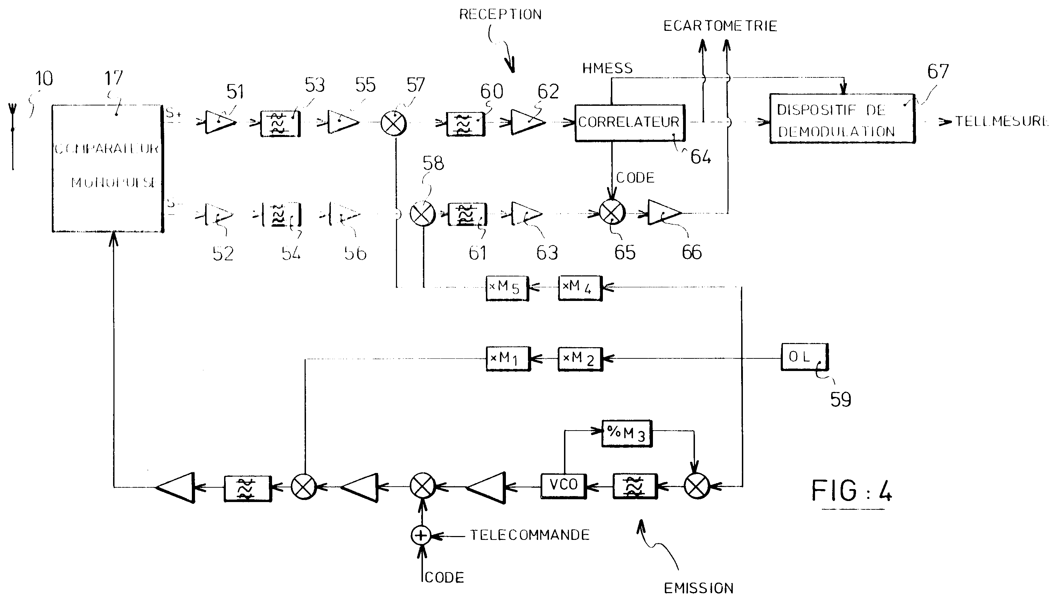

La figure 4 représente un synoptique de l'ensemble d'émission et de réception de la station de contrôle.
La partie émission est identique, à la fréquence près, à celle qui équipe le mobile.
A la réception, les signaux reçus par chacune des sources de l'antenne 10 sont traités par un comparateur monopulse 17 qui réalise la somme et la différence de ces signaux. La technique dite de monopulse d'amplitude est utilisée de manière à ce que les signaux reçus par les différentes sources de réception s'ajoutent en phase et puissent être ainsi démodulés facilement. le récepteur 12 comporte alors deux voies correspondant au traitement du signal somme S+ et du signal différence S-. Sur chacune des voies, les signaux sont successivement amplifiés dans un premier amplificateur 51, 52, filtrés dans un filtre passe-bande 53, 54, amplifiés dans un deuxième amplificateur 55, 56 et transposés à une fréquence intermédiaire par modulation, dans un modulateur 57, 58, avec une fréquence porteuse issue d'un oscillateur local 59 à un coefficient multiplicatif M4 X M5 près. Les signaux sont ensuite filtrés dans un filtre 60, 61 à bande étroite centré sur la fréquence intermédiaire et amplifiés dans un amplificateur 62, 63. Le code d'étalement étant en phase sur les deux voies, la corrélation du signal est effectuée sur une seule voie, par exemple la voie somme, par un corrélateur 64.

Le corrélateur 64 effectue la corrélation du signal avec un code pseudo-aléatoire local identique au code émis par le mobile et synchronisé sur celui-ci, puis effectue un filtrage pour éliminer un brouilleur éventuel.
Sur la voie différence, le spectre du signal différence en fréquence intermédiaire est comprimé par modulation avec le code d'étalement synchronisé, la modulation étant effectuée par un modulateur 65, puis amplifié dans un amplificateur 66.

En sortie du corrélateur 64 et de l'amplificateur 66, les signaux somme et différence sont appliqués sur le récepteur d'écartométrie 14. La démodulation du signal de télémesure s'effectue sur la voie somme. Pour cela, le signal somme issu du corrélateur 64 est appliqué à un dispositif 67 de démodulation cohérente qui permet de restituer les informations de télémesure émises par le mobile. Pour effectuer la démodulation du signal, il est nécessaire à la réception, de reconstituer l'horloge des données. Cette horloge peut être retrouvée sans utiliser de moyens complexes de la façon suivante.
A l'émission, le signal de télécommande, respectivement le signal de télémesure, à transmettre et le code pseudo-aléatoire qui les étale sont synchronisés et additionnés modulo 2 de façon qu'un nombre entier de bits d'information de télécommande, respectivement de télémesure, soit transmis pendant une séquence de code d'étalement. La synchronisation des données sur le code d'étalement permet, à la réception, de retrouver facilement l'horloge des données HMESS à partir de l'horloge du code local dès que la synchronisation entre le code local et le code émis est effectuée. En effet, l'horloge du code local est alors en phase avec l'horloge du code émis, cette dernière horloge étant elle-même en phase avec l'horloge des données. La reconstitution de l'horloge des données est nécessaire à la réception Pour démoduler ces données. Dans le cas des mobiles, l'horloge reconstituée dans le récepteur d'un mobile est également utilisée par l'émetteur de ce mobile pour rythmer la transmission des informations de télémesure.

Pour établir une liaison bilatérale entre la station de contrôle et un mobile particulier, l'unité de calcul 15 de la station de contrôle sélectionne le code associé au mobile choisi et envoie vers l'antenne 10 de la station une désignation d'objectif. Le positionneur 16 de l'antenne positionne initialement l'antenne suivant la direction estimée du mobile choisi, et un signal radioélectrique à spectre étalé par séquence directe est émis dans la direction estimée du mobile.

Seul le mobile dont le code coïncide avec le code choisi est capable de décoder le message émis. Il active alors son émetteur et renvoie un signal radioélectrique à spectre étalé par séquence directe à destination de la station de contrôle. Ce signal décodé par la station indique que la liaison bilatérale est établie. A partir de ce moment, l'antenne de la station fonctionne dans un mode de poursuite de l'objectif, ce qui permet d'effectuer la localisation de cet objectif avec une grande précision.

La localisation en distance peut être effectuée indépendamment de la transmission de données par la mesure du déphasage entre le code de l'émetteur et le code du récepteur au niveau de la station de contrôle.

En effet, lorsque la liaison bilatérale est établie, le récepteur de la station de contrôle a asservi son code d'étalement sur le code d'étalement du mobile, et le code d'étalement du mobile est asservi sur celui de l'émetteur de la station de contrôle.
Par ailleurs, dans le mobile, les codes d'étalement de l'émetteur et du récepteur sont synchrones.
Or le déphasage entre le code de l'émetteur de la station, respectivement du mobile, et le code du récepteur du mobile, respectivement de la station, représente le retard de propagation d/c à une constante près entre l'émission et la réception des signaux (où d représente la distance entre le mobile et la station et c représente la vitesse de propagation des signaux radioélectriques).
Par conséquent, dans la station de contrôle, le déphasage entre le code de l'émetteur et le code du récepteur est égal à 2 d/c à une constante près. Cette constante est représentative des retards de propagation dans les lignes et circuits électroniques. La mesure du déphasage entre les deux codes peut être effectuée en repérant le début du code au moyen de deux tops respectivement au niveau de l'émetteur et au niveau du récepteur et en mesurant le temps écoulé entre ces deux tops.

La localisation en distance peut également être effectuée par retour de l'information.
Dans ce cas l'émetteur de la station de contrôle envoie un message de format particulier. Dès que ce message est détecté par le récepteur, une réponse est transmise simultanément avec un signal de télémesure. La mesure du temps écoulé entre l'envoi du message et la réception de la réponse permet de calculer la distance séparant le mobile de la station de contrôle.

La localisation des mobiles en azimut est effectuée par la station de contrôle.
L'antenne 10 de la station est asservie par l'utilisation de la technique dite "monopulse d'amplitude".
les signaux de télémesure captés par l'antenne de la station sont traités par le comparateur monopulse 17, qui réalise la somme et la différence des signaux reçus sur chacune des sources de réception de l'antenne. la différence des signaux peut être effectuée dans le plan de gisement et/ou dans le plan de site. Les signaux somme et différence sont ensuite appliqués sur le récepteur à spectre étalé dans lequel les signaux sont corrélés avec le code d'étalement sélectionné pour constituer des signaux d'écartométrie. La corrélation des signaux par le code d'étalement permet d'étaler la puissance d'un éventuel brouilleur dans une large bande alors que le signal utile est reconstitué en bande étroite. Un filtrage approprié élimine alors la plus grande partie de l'énergie du brouilleur.
Cette corrélation est impérative puisqu'elle permet d'éliminer des signaux provenant d'éventuels brouilleurs avant d'effectuer un traitement par le récepteur d'écartométrie, et d'obtenir ainsi une fonction localisation résistante au brouillage.
Le récepteur d'écartométrie délivre un signal d'erreur de pointage angulaire permettant de commander la position de l'antenne et d'assurer la poursuite du mobile sélectionné. La connaissance de l'orientation angulaire de l'antenne de la station de contrôle permet de calculer la localisation angulaire des mobiles par rapport à la station de contrôle.
Sur les figures 1 et 4, le récepteur à spectre étalé comporte une voie somme et une voie différence permettant d'obtenir la localisation angulaire des mobiles dans le plan de site ou dans le plan de gisement. Il est également possible de connaître la position des mobiles à la fois dans le plan de site et dans le plan de gisement en rajoutant une deuxième voie différence.
Afin de mieux résister à d'éventuels brouilleurs large bande et garantir la transmission d'une information correcte, les données de télécommande et de télémesure à transmettre peuvent en outre être protégées au moyen d'un code correcteur d'erreur avec ou sans entrelacement.

## Revendications

1. Procédé pour la transmission d'informations entre des mobiles et une station de contrôle comportant au moins une antenne d'émission et de réception, et pour la radiolocalisation des mobiles, dans lequel les liaisons entre les mobiles et la station de contrôle sont réalisées selon une technique dite à étalement de spectre, caractérisé en ce qu'il consiste :
- à sélectionner et à désigner un mobile particulier,
- à pointer l'antenne (10) de la station dans une direction estimée du mobile désigné pour émettre vers le mobile des informations de télécommande à spectre étalé et recevoir en réponse, en provenance du mobile, des informations de télémesure à spectre étalé, la réception des informations de télémesure étant effectuée sur au moins deux sources de réception de l'antenne de la station,
- à traiter les signaux de télémesure reçus par les différentes sources de réception de manière à engendrer des signaux somme et différence,
- à engendrer des signaux d'écartométrie par corrélation des signaux somme et différence avec un code d'étalement associé au mobile désigné,
- à déterminer, à partir des signaux d'écartométrie, une erreur de pointage angulaire de l'antenne, et à asservir l'antenne en foncticn de cette erreur de pointage.

2. Procédé selon la revendication 1, caractérisé en ce que les émissions de signaux par la station de contrôle en direction d'un mobile s'effectuent dans une bande de fréquences F1, et en ce que les émissions de signaux par un mobile en direction de la station de contrôle s'effectuent dans une bande de fréquences F2 distincte de la bande F1.

3. Procédé selon la revendication 1, caractérisé en ce que à chaque mobile est attribué un code d'étalement différent, et en ce que la sélection d'un mobile est effectuée par la sélection du code d'étalement associé au mobile.

4. Procédé selon la revendication 3, caractérisé en ce que la localisation d'un mobile en distance est effectuée par la station de contrôle indépendamment de la transmission d'informations, en mesurant une valeur de déphasage entre les codes d'étalement à l'émission et à la réception.

5. Procédé selon la revendication 3, caractérisé en ce que la localisation d'un mobile en distance est effectuée par la station de contrôle en mesurant le temps écoulé entre l'émission d'un message et la réception de la réponse.

6. Procédé selon la revendication 3, caractérisé en ce que la localisation angulaire des mobiles par rapport à la station de contrôle est calculée à partir de la mesure de l'orientation angulaire de l'antenne de la station.

7. Procédé selon l'une quelconque des revendications précédentes, caractérisé en ce que, à l'émission, le signal de télécommande, respectivement le signal de télémesure, sont synchronisés avec le code d'étalement qui les étale, de manière qu'un nombre entier de bits d'information soit transmis pendant une séquence du code d'étalement.

8. Procédé selon l'une quelconque des revendications précédentes, caractérisé en ce que les informations à transmettre sont en outre protégées au moyen d'un code correcteur d'erreur.

9. Dispositif pour la transmission d'informations entre une station de contrôle et des mobiles et pour la radiolocalisation de mobile dans lequel les liaisons entre les mobiles et la station de contrôle sont réalisées selon une technique dite à étalement de spectre, caractérisé en ce que la station de contrôle comporte :
- au moins une antenne (10) munie de moyens d'asservissement en position pouvant fonctionner dans un mode de poursuite en azimut et en site et dans un mode de désignation en azimut et en site,
- un émetteur (11) à spectre étalé destiné à transmettre une information de télécommande vers un mobile préalablement sélectionné,
- un récepteur (12) à spectre étalé destiné à démoduler des signaux provenant du mobile sélectionné et à engendrer des signaux d'écartométrie pour réaliser l'asservissement de l'antenne,
- un récepteur d'écartométrie (13) destiné à assurer un suivi du mobile en mode poursuite à partir des signaux d'écartométrie délivrés par le récepteur (12) à spectre étalé,
- une unité de calcul (14) associée à un calculateur (15) destinée à identifier et à sélectionner un mobile particulier, à assurer la gestion du protocole de communication avec le calculateur embarqué et la station de contrôle, à assurer la gestion du positionnement de l'antenne de la station suivant des consignes provenant du calculateur, à effectuer la localisation angulaire du mobile en azimut et/ou en site, à effectuer la localisation du mobile en distance ;
et en ce que chaque mobile comporte :
- une antenne (20) d'émission et de réception
- un récepteur (21) à spectre étalé destiné à démoduler des messages provenant de la station de contrôle,
- un émetteur (22) à spectre étalé destiné à transmettre des signaux de télémesure,
- un calculateur (24) embarqué
- une unité de calcul (23) destinée à assurer la gestion du protocole de communication avec le calculateur embarqué et la station de contrôle, à assurer la gestion du positionnement de l'antenne du mobile suivant des consignes provenant du calculateur embarqué.

10. Dispositif selon la revendication 9, caractérisé en ce que l'antenne (10) de la station de contrôle comporte au moins une source d'émission et deux sources de réception.

11. Dispositif selon la revendication 10, caractérisé en ce que la station de contrôle comporte en outre un comparateur monopulse (17) destiné à engendrer à la réception une voie somme et au moins une voie différence à partir des signaux reçus par les différentes sources de réception.
